# EUROPÄISCHE PATENTSCHRIFT

(11) **EP 3 137 920 B1**
(45) Veröffentlichungstag und Bekanntmachung des Hinweises auf die Patenterteilung: **05.08.2020**
(21) Anmeldenummer: 15719713.8
(22) Anmeldetag: 29.04.2015
(51) Int. Cl.: G01S 15/931, G01S 7/52, G01S 15/87

(54) **VERFAHREN ZUM BETREIBEN EINER ULTRASCHALLSENSORVORRICHTUNG EINES KRAFTFAHRZEUGS, ULTRASCHALLSENSORVORRICHTUNG UND KRAFTFAHRZEUG**
METHOD FOR OPERATION OF AN ULTRASOUND SENSOR APPARATUS OF A VEHICLE, ULTRASOUND SENSOR APPARATUS AND VEHICLE
PROCÉDÉ POUR OPÉRER UN DISPOSITIF DE CAPTEUR ULTRASON D'UNE VÉHICULE, DISPOSITIF DE CAPTEUR ULTRASON ET VÉHICULE

(30) Priorität: 29.04.2014 DE 102014106008
(43) Veröffentlichungstag der Anmeldung: 08.03.2017
(73) Patentinhaber: Valeo Schalter und Sensoren GmbH, 74321 Bietigheim-Bissingen (DE)
(72) Erfinder: BARTSCH, Armin, 80634 München (DE); GÜNZEL, Thorben, 38118 Braunschweig (DE); ROSTOCKI, Paul-David, 74321 Bietigheim-Bissingen (DE); HALLEK, Michael, 74321 Bietigheim-Bissingen (DE); BRESSLER, Ulrich, 74321 Bietigheim-Bissingen (DE)
(74) Vertreter: Enge, Sebastian
(86) Internationale Anmeldenummer: PCT/EP2015/059398
(87) Internationale Veröffentlichungsnummer: WO 2015/165996

(56) Entgegenhaltungen:
- CN-U- 202 900 392
- DE-A1-102004 020 423
- JP-A- 2001 066 363
- US-A1- 2014 039 750

## Beschreibung

Die Erfindung betrifft ein Verfahren zum Betreiben einer Ultraschallsensorvorrichtung eines Kraftfahrzeugs, bei welchem durch zumindest einen Ultraschallsensor Ultraschallwellen in einen Umgebungsbereich des Kraftfahrzeugs zum Durchführen einer Abstandsmessung ausgesendet werden. Die Erfindung betrifft außerdem eine Ultraschallsensorvorrichtung, welche zum Durchführen eines solchen Verfahrens ausgebildet ist, sowie ein Kraftfahrzeug mit einer derartigen Ultraschallsensorvorrichtung.

Ultraschallsensoren für Kraftfahrzeuge sind bereits aus dem Stand der Technik in vielfältiger Ausgestaltung bekannt. Sie werden üblicherweise zum Unterstützen des Fahrers beim Manövrieren des Kraftfahrzeugs eingesetzt, insbesondere beim Durchführen von Parkvorgängen. Mittels der Ultraschallsensoren werden dabei Abstände zu Hindernissen gemessen, die sich in der Umgebung des Kraftfahrzeugs befinden. Die Ultraschallsensoren gehören hier zu einer Fahrerassistenzeinrichtung, welche als Parkhilfe bezeichnet wird. Jedoch werden Ultraschallsensoren heutzutage auch immer häufiger außerhalb dieser eigentlichen Parkhilfefunktionalität eingesetzt, wie beispielsweise zur Fahrunterstützung mit aktiven Bremseingriffen, d.h. bei automatischen Bremsassistenzsystemen, bei Systemen zur Totwinkelüberwachung, bei Systemen zur Abstandshaltung, bei Kollisionserkennungssystemen und dergleichen.

Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet ein Sendesignal - Ultraschall - aus und empfängt ein Empfangssignal, das ebenfalls ein Schallsignal ist und einem Signalanteil des ausgesendeten und an einem Hindernis reflektierten Sendesignals entspricht. Es werden also Ultraschallwellen ausgesendet, von einem Objekt reflektiert und wieder durch denselben Ultraschallsensor und/oder einen benachbarten Ultraschallsensor desselben Kraftfahrzeugs empfangen und ausgewertet. In Abhängigkeit von der gemessenen Laufzeit der Ultraschallwelle wird dann der Abstand und gegebenenfalls auch die relative Position und/oder eine Relativgeschwindigkeit relativ zum Kraftfahrzeug bestimmt.

Vorliegend geht es insbesondere um die Erkennung eines blockierten Zustands eines Ultraschallsensors eines Kraftfahrzeugs. Derartige Verfahren, welche zum Erkennen eines blockierten Zustands eines Ultraschallsensors dienen, sind bereits aus dem Stand der Technik bekannt. Im Stand der Technik wird dabei eine Situation erkannt, in welcher der Ultraschallsensor durch eine zusätzliche Masse, etwa durch Schmutz und/oder Schnee und/oder Eis, verdeckt ist. Da Ultraschallsensoren heutzutage immer häufiger auch außerhalb der eigentlichen Parkhilfefunktionalität eingesetzt werden, soll im Betrieb des Kraftfahrzeugs sichergestellt werden, dass die am Kraftfahrzeug vorhandenen Ultraschallsensoren die in der Umgebung des Kraftfahrzeugs befindlichen Hindernisse sicher erkennen bzw. die Abstände auch zuverlässig bis zu einer vorbestimmten Rechweite erfassen können. Sind die Ultraschallsensoren mit einer zusätzlichen Masse verdeckt, soll dies zuverlässig detektiert werden. Die bekannten Verfahren zur Erkennung von Eis oder Schmutz basieren grundsätzlich auf der Auswertung von Nebeneffekten, welche durch die zusätzliche Masse an dem Ultraschallsensor verursacht werden. So wird durch eine zusätzliche Masse beispielsweise die so genannte Ausschwingzeit der Membran des Ultraschallsensors beeinflusst oder es wird ein virtuelles Echo bzw. ein Scheinecho generiert, was durch entsprechende Auswertung des elektrischen Empfangssignals des Ultraschallsensors detektiert werden kann.

Im Gegenstand gemäß DE 102 47 971 A1 wird die Eigenfrequenz bzw. Resonanzfrequenz des Ultraschallsensors gemessen und mit abgelegten Referenzwerten verglichen. Dieses Verfahren basiert auf der Tatsache, dass die Resonanzfrequenz des Ultraschallsensors ein direkter Indikator für eine Verschmutzung, Eis- oder Schneeschicht ist, da diese zusätzliche Schicht die Masse der harmonischen Schwingung beeinflusst. Mit der zusätzlichen Masse der Verschmutzung bzw. der Eis- oder Schneeschicht ändert sich nämlich auch die schwingende Masse und folglich auch die Resonanzfrequenz des Sensors.

Um einen mit Schmutz und/oder Eis und/oder Schnee verdeckten Zustand eines Ultraschallsensors erkennen zu können, schlägt die DE 10 2009 040 992 A1 vor, die Ausschwingfrequenz des Ultraschallsensors im Anschluss an eine Anregung der Membran zu erfassen und mit der Anregungsfrequenz zu vergleichen. Abhängig von dem Ergebnis dieses Vergleichs wird festgestellt, ob der Ultraschallsensor blockiert ist oder nicht.

Weiterhin beschreibt die DE 10 2010 021 960 A1 ein Verfahren, bei welchem zur Erkennung des blockierten Zustands eines Ultraschallsensors die Ausschwingzeit der Membran über mehrere Messzyklen des Ultraschallsensors hinweg ausgewertet wird. Eine weitere Plausibilisierung kann hier darin bestehen, dass die Erkennung des blockierten Zustands nur unter der Voraussetzung erfolgt, dass eine Temperatur der Umgebung des Kraftfahrzeugs unterhalb eines vorgegebenen Grenzwerts liegt. Dieser Grenzwert kann beispielsweise 0°C betragen. Somit kann die Fehlerrate bei der Erkennung des blockierten Zustands reduziert werden.

Es hat sich nun herausgestellt, dass in manchen Situationen der Ultraschallsensor zwar blockiert sein kann, dass jedoch diese "Blindheit" des Ultraschallsensors nicht durch eine zusätzliche Masse am Ultraschallsensor selbst verursacht wird. Es wurden nämlich Situationen detektiert, bei denen eine "Blindheit" des Ultraschallsensors auch ohne eine wesentliche Änderung der Ausschwingzeit der Membran sowie ohne Änderung der Resonanzfrequenz aufgetreten ist.

DE 10 2004 020 423 A1 offenbart ein Verfahren zur Erkennung von fiktiven Hindernissen bei Abstandsmessungen eines Kraftfahrzeuges aufgrund von Reflexionen eines Messmediums, insbesondere von Ultraschall, an kraftfahrzeugseitigen Fahrzeugteilen.

Es ist Aufgabe der Erfindung, bei einem Verfahren der eingangs genannten Gattung Maßnahmen zu treffen, die einen zuverlässigen Betrieb des zumindest einen Ultraschallsensors gewährleisten.

Diese Aufgabe wird erfindungsgemäß durch ein Verfahren, durch eine Ultraschallsensorvorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben einer Ultraschallsensorvorrichtung eines Kraftfahrzeugs, insbesondere eines Personenkraftwagens. Durch zumindest einen Ultraschallsensor der Ultraschallsensorvorrichtung werden Ultraschallwellen in einen Umgebungsbereich des Kraftfahrzeugs zum Durchführen einer Abstandsmessung ausgesendet. Erfindungsgemäß ist vorgesehen, dass anhand von Sensordaten zumindest eines von dem Ultraschallsensor verschiedenen Sensors des Kraftfahrzeugs eine von einer Auspuffanlage des Kraftfahrzeugs in den Umgebungsbereich ausgegebene Abgaswolke, an welcher die Ultraschallwellen reflektiert werden können, durch die Ultraschallsensorvorrichtung detektiert wird und das Betreiben der Ultraschallsensorvorrichtung abhängig von der Detektion der Abgaswolke erfolgt.

Die Erfindung basiert auf mehreren Erkenntnissen: Der Erfindung liegt zunächst die Erkenntnis zugrunde, dass im Stand der Technik manchmal Situationen auftreten können, bei denen ein blockierter Zustand bzw. eine "Blindheit" des Ultraschallsensors anhand von Schwingungsparametern des Ultraschallsensors nicht detektiert werden kann. Es kann nämlich auch eine "Blindheit" des Ultraschallsensors auftreten, ohne dass sich die Ausschwingzeit oder aber die Resonanzfrequenz des Sensors wesentlich ändert. Dieser Zustand kann im Stand der Technik nicht detektiert und folglich auch nicht angezeigt werden. Eine weitere Erkenntnis besteht darin, dass eine solche Situation dadurch verursacht werden kann, dass sich im Bereich des Ultraschallsensors eine Abgaswolke ausbildet, welche von einer Auspuffanlage des Kraftfahrzeugs ausgegeben wird. Die Erfindung beruht nicht zuletzt auf der Erkenntnis, dass die Nachteile des Stands der Technik dadurch umgangen werden können, dass eine derartige Abgaswolke, an deren Oberfläche bzw. Grenzschicht die Ultraschallwellen potentiell reflektiert werden und somit die Abstandsmessung verfälschen können, durch die Ultraschallsensorvorrichtung detektiert wird und dann entsprechende Maßnahmen getroffen werden, welche einen sicheren Betrieb gewährleisten. Die Ultraschallsensorvorrichtung kann somit besonders betriebssicher und zuverlässig betrieben werden.

Unter einer Abgaswolke wird vorliegend eine Phase und somit eine besonders hohe Konzentration eines Abgases verstanden, welches durch die Auspuffanlage des Kraftfahrzeugs ausgegeben wird und sich dann im Bereich eines Endrohrs der Auspuffanlage konzentriert. Es hat sich herausgestellt, dass eine solche Abgaswolke eine Grenzschicht besitzt, an welcher die Ultraschallwellen reflektiert werden können. Diese Reflektion verursacht ein Signalecho am Ultraschallsensor, was im Stand der Technik fälschlicherweise als Detektion eines Objekts interpretiert wird.

Hinsichtlich der Detektion der Abgaswolke im Erfassungsbereich des Ultraschallsensors ist vorgesehen, dass abhängig von den genannten Sensordaten ein Wahrscheinlichkeitswert berechnet wird, welcher die aktuelle Wahrscheinlichkeit für die Präsenz einer derartigen Abgaswolke angibt, an welcher Ultraschallwellen reflektiert werden können. Die Abgaswolke wird dann detektiert bzw. die Detektion dann bestätigt, wenn der berechnete Wahrscheinlichkeitswert einen vorbestimmten Grenzwert überschreitet. Zur Berechnung des Wahrscheinlichkeitswerts können insbesondere mehrere Messgrößen herangezogen werden, welche durch verschiedenste Sensoren des Kraftfahrzeugs erfasst werden können. Je mehr Messgrößen bzw. Parameter bei der Berechnung des Wahrscheinlichkeitswerts berücksichtigt werden, desto präziser und realitätsgetreuer kann diese Wahrscheinlichkeit für die Präsenz der Abgaswolke bestimmt werden.

In einer Ausführungsform kann vorgesehen sein, dass das Detektieren der Abgaswolke, insbesondere die Bestimmung des Wahrscheinlichkeitswerts, abhängig von zumindest einer Messgröße als Sensordaten erfolgt, welche mittels eines in der Auspuffanlage selbst angeordneten Sensors gemessen wird. Die Verwendung eines solchen Sensors hat den Vorteil, dass anhand von Sensordaten dieses Sensors sehr zuverlässig auf die Konzentration des Abgases im Bereich des Endrohrs zurückgeschlossen und somit mit großer Genauigkeit bestimmt werden kann, ob sich im Bereich des Ultraschallsensors eine Abgaswolke ausbildet, welche ein Hindernis für die Ultraschallwellen darstellt. Insbesondere kann die Detektion der Abgaswolke abhängig von zumindest einer der folgenden Messgrößen erfolgen:
- einer Temperatur des Abgases - diese kann mittels eines Temperatursensors in der Auspuffanlage erfasst werden; für die Detektion der Abgaswolke kann vorausgesetzt werden, dass die Temperatur des Abgases größer als ein vorbestimmter Schwellwert ist - dies bedeutet insbesondere, dass der oben genannte Wahrscheinlichkeitswert nur dann größer als Null sein kann, wenn die Temperatur des Abgases größer als der Schwellwert ist; und/oder
- einer Feuchtigkeit des Abgases - diese kann beispielsweise mittels eines Feuchtigkeitssensors in der Auspuffanlage erfasst werden; für die Detektion der Abgaswolke kann vorausgesetzt werden, dass die Feuchtigkeit des Abgases größer als ein vorbestimmter zugeordneter Schwellwert ist - dies bedeutet insbesondere, dass der oben genannte Wahrscheinlichkeitswert nur dann größer als Null sein kann, wenn die Feuchtigkeit des Abgases größer als der zugeordnete Schwellwert ist; und/oder
- einer Strömungsgeschwindigkeit des Abgases - auch diesbezüglich kann vorgesehen sein, dass die Abgaswolke nur dann detektiert werden kann bzw. der Wahrscheinlichkeitswert größer als Null sein kann, wenn die Strömungsgeschwindigkeit größer als ein vorgegebener zugeordneter Schwellwert ist; und/oder
- einem Abgasdruck - auch zu dieser Messgröße kann ein entsprechender Schwellwert vordefiniert werden, mit welchem der aktuelle Abgasdruck verglichen wird, wobei die Detektion der Abgaswolke voraussetzt, dass der Abgasdruck größer als der zugeordnete Schwellwert ist; und/oder
- einem Massenstrom des Abgases - auch dieser kann mit einem zugeordneten Schwellwert verglichen werden; die Abgaswolke kann nur dann detektiert werden, wenn der Massenstrom größer als der zugeordnete Schwellwert ist; und/oder
- einer das Verhältnis einer Verbrennungsluft zu einem Kraftstoff in zumindest einem Brennraum einer Brennkraftmaschine des Kraftfahrzeugs charakterisierenden Messgröße, welche insbesondere mittels einer LambdaSonde gemessen wird - die Detektion der Abgaswolke kann voraussetzen, dass das Verhältnis Verbrennungsluft/Kraftstoff kleiner als ein zugeordneter Schwellwert ist.

Ergänzend oder alternativ kann vorgesehen sein, dass beim Detektieren der Abgaswolke auch eine aktuelle Motortemperatur einer Brennkraftmaschine des Kraftfahrzeugs als Sensordaten berücksichtigt wird. Es gilt nämlich die Beziehung, dass je kleiner die Motortemperatur ist, desto größer die Wahrscheinlichkeit der Präsenz einer Abgaswolke ist.

Es kann auch vorgesehen sein, dass das Detektieren der Abgaswolke abhängig von atmosphärischen Umgebungsbedingungen des Kraftfahrzeugs erfolgt, wie insbesondere abhängig von einer Windgeschwindigkeit und/oder einer Luftfeuchtigkeit und/oder einer Lufttemperatur in der Umgebung des Kraftfahrzeugs. Diese Parameter können mittels entsprechender Sensoren und/oder abhängig von einer aktuellen geographischen Position des Kraftfahrzeugs erfasst werden, welche mittels eines Navigationsempfängers - insbesondere eines GPS-Empfängers - erfasst und an einen Internetserver übermittelt wird, welcher dann dem Kraftfahrzeug die aktuellen atmosphärischen Umgebungsbedingungen für die aktuelle Position des Kraftfahrzeugs mitteilt. Auch die atmosphärischen Umgebungsbedingungen haben einen Einfluss auf die Erzeugung einer Abgaswolke im Bereich des Kraftfahrzeugs. So ist die Präsenz der Abgaswolke umso wahrscheinlicher, je geringer die Lufttemperatur und/oder je größer die Luftfeuchtigkeit der Umgebung ist.

Wird die Lufttemperatur erfasst, so kann eine Temperaturdifferenz zwischen der Abgastemperatur einerseits und der Lufttemperatur andererseits und/oder eine Differenz zwischen der Motortemperatur einerseits und der Lufttemperatur andererseits bestimmt und bei der Detektion der Abgaswolke berücksichtigt werden. Je größer diese Temperaturdifferenz ist, desto größer ist nämlich die Wahrscheinlichkeit der Präsenz einer Abgaswolke im Bereich des Endrohrs der Auspuffanlage.

Das Detektieren der Abgaswolke, und insbesondere die Berechnung der Wahrscheinlichkeit für die Präsenz der Abgaswolke, kann auch unter Berücksichtigung zumindest eines Konstruktionsparameters des Kraftfahrzeugs erfolgen. Als Konstruktionsparameter kann zumindest einer der folgenden Parameter berücksichtigt werden:
- ein Abstand zwischen dem Ultraschallsensor einerseits und einem Auslass eines Endrohrs der Auspuffanlage andererseits - es gilt nämlich die Beziehung, dass je geringer dieser Abstand ist, desto größer die Wahrscheinlichkeit für die Präsenz einer Abgaswolke im Erfassungsbereich des Ultraschallsensors ist; und/oder
- eine Querschnittsgröße des Endrohrs - auch der Querschnitt des Endrohrs hat nämlich einen Einfluss auf die Erzeugung der Abgaswolke im Bereich des Endrohrs; und/oder
- die Anzahl von Endrohren der Auspuffanlage und/oder
- die Anzahl von Abgasturboladern des Kraftfahrzeugs und/oder
- ein Hubvolumen einer Brennkraftmaschine des Kraftfahrzeugs, d.h. ein Hubraum und/oder
- ein Typ der Brennkraftmaschine, d.h. ob es sich bei der Brennkraftmaschine um ein Ottomotor oder aber eine Diesel-Maschine handelt.

Bei der Detektion der Abgaswolke kann optional auch zumindest ein Parameter berücksichtigt werden, welcher durch den Ultraschallsensor selbst erfasst wird. Und zwar kann das Detektieren der Abgaswolke, insbesondere die Berechnung des Wahrscheinlichkeitswerts, in Abhängigkeit von einer Laufzeit der Ultraschallwellen und somit abhängig von den gemessenen Abständen und/oder in Abhängigkeit von der Anzahl von Zielechos bzw. der Anzahl von detektierten Objekten erfolgen. Dabei kann eine direkte Messung, bei welcher ein und derselbe Ultraschallsensor die Ultraschallwellen aussendet und dann die Zielechos empfängt, und/oder eine indirekte Messung berücksichtigt werden, bei welcher ein Ultraschallsensor die Ultraschallwellen aussendet und ein separater Ultraschallsensor die Zielechos empfängt. Wird beispielsweise ein Objekt in einem sehr geringen Abstand detektiert, so kann dies zur Plausibilisierung der Detektion der Abgaswolke dahingehend interpretiert werden, dass es sich bei diesem nahen Objekt um die Abgaswolke selbst handelt. Auf diesem Wege kann die Detektion der Abgaswolke zuverlässig plausibilisiert werden.

Wird die Abgaswolke detektiert, so können verschiedenste Ausführungsformen vorgesehen sein, welche dann für einen betriebssicheren und zuverlässigen Betrieb der Ultraschallsensorvorrichtung sorgen:
Das Betreiben der Ultraschallsensorvorrichtung abhängig von der Detektion der Abgaswolke kann beinhalten, dass durch die Ultraschallsensorvorrichtung gemessene Abstandswerte, welche kleiner als ein vorbestimmter Schwellwert sind, aufgrund der Detektion der Abgaswolke ausgeblendet werden. Dies bedeutet, dass ein detektiertes Objekt, welches in einem Abstand kleiner als der vorbestimmte Schwellwert detektiert wird, dem Fahrer des Kraftfahrzeugs nicht angezeigt wird. Dies beruht darauf, dass es sich bei diesem Objekt mit sehr hoher Wahrscheinlichkeit um die Abgaswolke handelt. Diese Ausführungsform hat den Vorteil, dass Situationen verhindert werden können, in denen der Fahrer unnötig durch entsprechende Warnsignale gestört wird, obwohl sich in der Umgebung des Kraftfahrzeugs tatsächlich kein reales Objekt befindet.

Dieses Ausblenden der Abstandswerte, welche kleiner als der Schwellwert sind, kann auch unter der Voraussetzung erfolgen, dass die aktuelle Geschwindigkeit des Kraftfahrzeugs unterhalb eines vorbestimmten Schwellwerts liegt. Die Abgaswolke kann sich nämlich üblicherweise nur im Stillstand des Kraftfahrzeugs oder aber bei niedrigen Geschwindigkeiten ausbilden. Bewegt sich das Kraftfahrzeug mit einer größeren Geschwindigkeit, werden vorzugsweise alle gemessenen Abstandswerte ausgegeben.

Die Ultraschallsensorvorrichtung kann auch so ausgebildet sein, dass abhängig von zumindest einem Schwingungsparameter des Ultraschallsensors, insbesondere abhängig von einer Ausschwingzeit einer Membran des Ultraschallsensors, ein - insbesondere durch Schmutz und/oder Eis und/oder Schnee - blockierter Zustand des Ultraschallsensors detektiert werden kann. Das Betreiben der Ultraschallsensorvorrichtung abhängig von der Detektion der Abgaswolke kann dann beinhalten, dass aufgrund der Detektion der Abgaswolke die Detektion des blockierten Zustands durch die Ultraschallsensorvorrichtung ignoriert wird. Dies bedeutet insbesondere, dass dann, wenn sowohl die Abgaswolke als auch ein durch zusätzliche Masse blockierter Zustand des Ultraschallsensors detektiert wird, die Ausgabe eines entsprechenden Warnsignals unterbleibt, durch welches der Fahrer sonst auf den blockierten Zustand des Ultraschallsensors und somit auf die Notwendigkeit einer Reinigung des Sensors hingewiesen wird.

Ergänzend oder alternativ kann das Betreiben der Ultraschallsensorvorrichtung abhängig von der Detektion der Abgaswolke beinhalten, dass aufgrund der Detektion der Abgaswolke ein Steuersignal an die Auspuffanlage abgegeben werden kann. Durch entsprechende Ansteuerung zumindest einer Komponente der Auspuffanlage kann eine vorhandene Abgaswolke reduziert werden und ein zuverlässiger Betrieb der Ultraschallsensorvorrichtung ermöglicht werden.

In diesem Zusammenhang kann insbesondere vorgesehen sein, dass durch das Steuersignal eine Drosselklappe der Auspuffanlage angesteuert wird, mittels welcher das Abgas gedrosselt wird. Durch eine kurzzeitige Drosselung des Abgases kann die Abgaswolke abgebaut und ein zuverlässiger Betrieb der Ultraschallsensorvorrichtung wieder hergestellt werden.

Ergänzend oder alternativ kann die Auspuffanlage zumindest zwei Endrohre aufweisen, von denen zumindest eines verschließbar ausgebildet ist, wobei durch das Steuersignal das zumindest eine verschließbare Endrohr geöffnet werden kann. Durch das Öffnen aller Endrohre kann eine bessere bzw. günstigere Verteilung des Abgases erreicht werden, wodurch wiederum eine bereits detektierte Abgaswolke vernichtet werden kann.

Die Erfindung betrifft außerdem eine Ultraschallsensorvorrichtung für ein Kraftfahrzeug, mit zumindest einem Ultraschallsensor und mit einer Steuereinrichtung, welche dazu ausgelegt ist, den Ultraschallsensor zum Aussenden von Ultraschallwellen in einen Umgebungsbereich des Kraftfahrzeugs zum Durchführen einer Abstandsmessung anzusteuern. Die Ultraschallsensorvorrichtung ist zum Durchführen eines erfindungsgemäßen Verfahrens ausgebildet.

Ein erfindungsgemäßes Kraftfahrzeug, insbesondere ein Personenkraftwagen, umfasst eine erfindungsgemäße Ultraschallsensorvorrichtung.

Die mit Bezug auf das erfindungsgemäße Verfahren vorgestellten bevorzugten Ausführungsformen und deren Vorteile gelten entsprechend für die erfindungsgemäße Ultraschallsensorvorrichtung sowie für das erfindungsgemäße Kraftfahrzeug.

Weitere Merkmale der Erfindung ergeben sich aus den Ansprüchen, den Figuren und der Figurenbeschreibung.

Die Erfindung wird nachfolgend anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensorvorrichtung gemäß einer Ausführungsform der Erfindung; und
- Fig. 2: ein Flussdiagramm eines Verfahrens gemäß einer Ausführungsform der Erfindung.

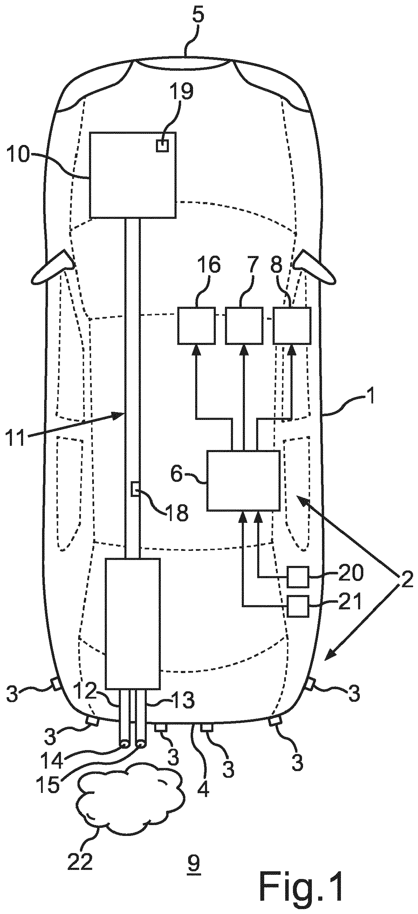

Ein in Fig. 1 dargestelltes Kraftfahrzeug 1 ist beispielsweise ein Personenkraftwagen. Das Kraftfahrzeug 1 beinhaltet eine Ultraschallsensorvorrichtung 2, welche beispielsweise eine Parkhilfe oder ein Parkassistenzsystem ist. Die Ultraschallsensorvorrichtung 2 dient zum Unterstützen des Fahrers des Kraftfahrzeugs 1 beim Durchführen von Parkvorgängen. Sie umfasst zu diesem Zwecke eine Vielzahl von Ultraschallsensoren 3, welche am hinteren Stoßfänger 4 verteilt angeordnet sind. Entsprechende Ultraschallsensoren 3 können auch am vorderen Stoßfänger 5 angeordnet sein (nicht abgebildet). Die Ultraschallsensoren 3 sind mit einer Steuereinrichtung 6 der Ultraschallsensorvorrichtung 2 elektrisch gekoppelt. Die Steuereinrichtung 6 stellt ein Steuergerät dar, welches beispielsweise einen digitalen Signalprozessor und/oder einen Mikrocontroller beinhalten kann und zur Ansteuerung der Ultraschallsensoren 3 dient. Die Steuereinrichtung 6 empfängt Messdaten von den Ultraschallsensoren 3 und bestimmt in Abhängigkeit von diesen Messdaten die Abstände zwischen dem Kraftfahrzeug 1 und in seiner Umgebung befindlichen Hindernissen. In Abhängigkeit von diesen Abständen kann die Steuereinrichtung 6 beispielsweise einen Lautsprecher 7 und/oder eine optische Anzeigeeinrichtung 8 - beispielsweise ein Display - ansteuern. Mit Hilfe des Lautsprechers 7 und/oder der Anzeigeeinrichtung 8 wird der Fahrer über die gemessenen Abstände informiert. Zur Durchführung einer Abstandsmessung werden die jeweiligen Ultraschallsensoren 3 zum Aussenden von Ultraschallwellen in einen Umgebungsbereich 9 des Kraftfahrzeugs 1 angesteuert. Dabei sind sowohl sogenannte Kreuzmessungen (indirekte Messungen) als auch direkte Messungen möglich. Bei indirekten Messungen sendet ein erster Ultraschallsensor 3 die Ultraschallwellen aus, während zumindest ein anderer, zweiter Ultraschallsensor 3 als Empfangssensor betrieben wird, welcher die Echosignale empfängt. Bei direkten Messungen wird hingegen ein und derselbe Ultraschallsensor 3 sowohl zum Senden als auch zum Empfangen angesteuert.

Gegebenenfalls kann die Ultraschallsensorvorrichtung 2 auch ein automatisches oder semi-automatisches Parkassistenzsystem sein, mittels welchem eine Parklücke automatisch detektiert und eine geeignete Parkbahn automatisch berechnet wird, entlang welcher das Kraftfahrzeug 1 dann automatisch oder semi-autonom in die Parklücke geführt werden kann. Bei vollautomatischen Parkassistenzsystemen übernimmt die Ultraschallsensorvorrichtung 2 sowohl die Längsführung als auch die Querführung des Kraftfahrzeugs 1, während bei semi-automatischen bzw. halbautomatischen Systemen die Ultraschallsensorvorrichtung 2 lediglich die Querführung und somit die Lenkung automatisch übernimmt, während der Fahrer selbst Gas geben und bremsen muss. Es sind auch Systeme bekannt, bei denen der Fahrer sowohl die Längsführung als auch die Querführung selbst übernehmen muss, jedoch Hinweise bezüglich der Lenkung durch die Ultraschallsensorvorrichtung 2 ausgegeben werden.

Zum Antreiben des Kraftfahrzeugs 1 ist eine Brennkraftmaschine 10 vorgesehen, an welcher in an sich bekannter Weise eine Auspuffanlage 11 des Kraftfahrzeugs 1 angebunden ist. Die Auspuffanlage 11 weist im Ausführungsbeispiel zwei Endrohre 12, 13 auf, welche jeweils einen Auslass 14, 15 aufweisen, über welchen ein durch die Brennkraftmaschine 10 erzeugtes Abgas in den Umgebungsbereich 9 ausgegeben wird. Im Kraftfahrzeug 1 ist des Weiteren ein Steuergerät 16 angeordnet, welches zur Ansteuerung einer nicht dargestellten Drosselklappe der Auspuffanlage 11 und/oder zum Schließen und Öffnen der Endrohre 12, 13 und/oder zur Ansteuerung der Brennkraftmaschine 10 dient.

In der Auspuffanlage 11 ist zumindest ein Sensor 18 angeordnet, welcher zum Erfassen zumindest einer der folgenden Messgrößen dient: einer aktuellen Temperatur des Abgases und/oder einer aktuellen Feuchtigkeit des Abgases und/oder einer aktuellen Strömungsgeschwindigkeit des Abgases und/oder eines aktuellen Abgasdrucks und/oder eines aktuellen Massenstromes des Abgases und/oder einer Messgröße, welche das aktuelle Verhältnis einer Verbrennungsluft zu einem Kraftstoff in zumindest einem Brennraum der Brennkraftmaschine 10 charakterisiert (in diesem Falle wird eine LambdaSonde verwendet).

Die Sensordaten des zumindest einen Sensors 18 werden an die Steuereinrichtung 6 übermittelt.

Darüber hinaus kann mittels eines Temperatursensors 19 eine Motortemperatur der Brennkraftmaschine 10 erfasst werden. Auch diese Sensordaten, welche die jeweils aktuelle Motortemperatur angeben, werden an die Steuereinrichtung 6 übermittelt.

Im Kraftfahrzeug 1 kann außerdem zumindest ein Sensor 20 angeordnet sein, welcher zur Erfassung von atmosphärischen Umgebungsbedingungen des Kraftfahrzeugs 1 dient, insbesondere einer Luftfeuchtigkeit und/oder Lufttemperatur und/oder Windgeschwindigkeit im Umgebungsbereich 9. Ergänzend oder alternativ können zur Erfassung dieser Daten auch Positionssignale herangezogen werden, welche mittels eines Navigationsempfängers 21 (zum Beispiels GPS) bereitgestellt werden und die aktuelle geographische Position des Kraftfahrzeugs 1 angeben. Ist die aktuelle Position des Kraftfahrzeugs 1 in der Steuereinrichtung 6 bekannt, kann eine Kommunikationsverbindung zwischen der Steuereinrichtung 6 einerseits und einem Internetserver andererseits aufgebaut werden, über welche von der Steuereinrichtung 6 an den Internetserver die aktuelle Position des Kraftfahrzeugs 1 übermittelt wird. Der Internetserver kann dann an die Steuereinrichtung 6 Daten übermitteln, welche die aktuelle Lufttemperatur und/oder Windgeschwindigkeit und/oder Luftfeuchtigkeit in der Umgebung des Kraftfahrzeugs 1 angeben.

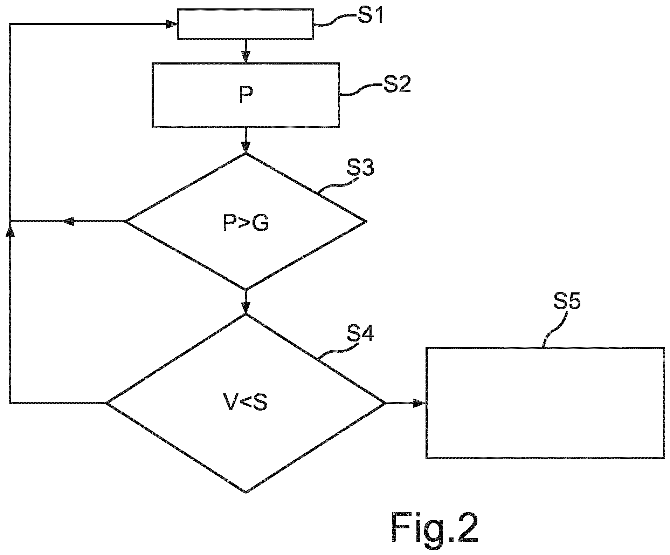

Die Steuereinrichtung 6 ist so ausgelegt, dass sie abhängig von Sensordaten detektieren kann, ob sich im Bereich des jeweiligen Auslasses 14, 15 der Endrohre 12, 13 und somit im Erfassungsbereich der Ultraschallsensoren 3 eine Abgaswolke 22 ausbildet, an deren Grenzschicht die von den Ultraschallsensoren 3 ausgesendeten Ultraschallwellen reflektiert werden können. Ein diesbezügliches Verfahren zum Betreiben der Ultraschallsensorvorrichtung 2 wird nachfolgend unter Bezugnahme auf Fig. 2 näher erläutert:
Das Verfahren beginnt in Schritt S1, in welchem durch die Steuereinrichtung 6 Sensordaten zur Detektion einer Abgaswolke 22 erfasst werden. Es können folgende Sensordaten berücksichtigt werden:
- die gemessene Temperatur des Abgases und/oder
- die Feuchtigkeit des Abgases und/oder
- die Strömungsgeschwindigkeit des Abgases und/oder
- der Abgasdruck und/oder
- der Massenstrom des Abgases und/oder
- das Verhältnis der Verbrennungsluft zum Kraftstoff und/oder
- die aktuelle Motortemperatur und/oder
- die aktuelle Windgeschwindigkeit und/oder Luftfeuchtigkeit und/oder Lufttemperatur in der Fahrzeugumgebung.

Optional können in der Steuereinrichtung 6 auch folgende Konstruktionsparameter des Kraftfahrzeugs abgelegt sein und bei der Detektion der Abgaswolke 22 berücksichtigt werden:
- ein Abstand zwischen dem jeweiligen Ultraschallsensor 3 und dem Auslass 14, 15 des jeweiligen Endrohrs 12, 13 und/oder
- eine Querschnittsgröße der Endrohre 14, 15 und/oder
- die Anzahl von Endrohren 12, 13 und/oder
- die Anzahl von Abgasturboladern der Auspuffanlage 11 und/oder
- der Hubraum der Brennkraftmaschine 10 und/oder
- der Typ der Brennkraftmaschine 10 (Otto-Motor oder Diesel).

Optional kann die Steuereinrichtung 6 auch die durch den jeweiligen Ultraschallsensor 3 gemessenen Abstände und/oder die Anzahl von empfangenen Zielechos berücksichtigen.

In einem Schritt S2 werden die oben genannten Größen bzw. Parameter in einer beliebigen Kombination durch die Steuereinrichtung 6 ausgewertet, wobei auch eine Gewichtung der Messgrößen vorgenommen werden kann. Bei der Detektion der Abgaswolke 22 wird ein Wahrscheinlichkeitswert P berechnet, welcher die aktuelle Wahrscheinlichkeit für das Vorhandensein einer solchen Abgaswolke 22 angibt. Bei der Berechnung des Wahrscheinlichkeitswerts P werden die oben genannten Sensordaten und optional auch die Konstruktionsparameter des Kraftfahrzeugs 1 berücksichtigt. Wie bereits erwähnt, können diese auch entsprechend gewichtet werden. Gemäß Schritt S3 wird dann überprüft, ob der berechnete Wahrscheinlichkeitswert P größer als ein vorgegebener Grenzwert G ist. Wird durch die Steuereinrichtung 6 detektiert, dass der Wahrscheinlichkeitswert P größer als der Grenzwert G ist, so wird von einer Präsenz der Abgaswolke 22 im Erfassungsbereich der Ultrasensorvorrichtung 2 ausgegangen.

Wird keine Abgaswolke 22 detektiert, so kehrt das Verfahren zum Schritt S1 zurück. Wird hingegen die Abgaswolke 22 gemäß Schritt S3 detektiert, so geht das Verfahren zu einem weiteren Schritt S4 über, in welchem überprüft wird, ob die aktuelle Geschwindigkeit V des Kraftfahrzeugs 1 kleiner als ein vorgegebener Schwellwert S ist. Ist dies nicht der Fall, so kehrt das Verfahren zum Schritt S1 zurück. Ist die Geschwindigkeit V kleiner als der Schwellwert S, so kann die Steuereinrichtung 6 gemäß Schritt S5 zumindest eine der folgenden Maßnahmen ergreifen:
- die Steuereinrichtung 6 kann infolge der Detektion der Abgaswolke 22 diejenigen Abstandswerte ausblenden bzw. ignorieren, welche kleiner als ein vorbestimmter Schwellwert sind und somit von der Abgaswolke 22 stammen können; und/oder
- wird anhand zumindest eines Schwingungsparameters eines Ultraschallsensors 3 detektiert, dass dieser Ultraschallsensor durch Schnee und/oder Schmutz und/oder Eis blockiert bzw. verdeckt ist, so kann diese Detektion des blockierten Zustands des Ultraschallsensors 3 zunächst infolge der Detektion der Abgaswolke 22 ignoriert werden; und/oder
- die Steuereinrichtung 6 kann auch ein Steuersignal an das Steuergerät 16 abgeben, um beispielsweise mittels der genannten Drosselklappe das Abgas zu drosseln und/oder alle vorhandenen Endrohre 14, 15 zu öffnen, um das ausgegebene Abgas besser zu verteilen.

## Patentansprüche

1. Verfahren zum Betreiben einer Ultraschallsensorvorrichtung (2) eines Kraftfahrzeugs (1), bei welchem durch zumindest einen Ultraschallsensor (3) der Ultraschallsensorvorrichtung (2) Ultraschallwellen in einen Umgebungsbereich (9) des Kraftfahrzeugs (1) zum Durchführen einer Abstandsmessung ausgesendet werden,
wobei anhand von Sensordaten zumindest eines von dem Ultraschallsensor (3) verschiedenen Sensors (18, 19, 20, 21) des Kraftfahrzeugs (1) eine von einer Auspuffanlage (11) des Kraftfahrzeugs (1) in den Umgebungsbereich (9) ausgegebene Abgaswolke (22), an welcher die Ultraschallwellen reflektiert werden, durch die Ultraschallsensorvorrichtung (2) detektiert wird und das Betreiben der Ultraschallsensorvorrichtung (2) abhängig von der Detektion der Abgaswolke (22) erfolgt, und **dadurch gekennzeichnet,**
**dass** das Detektieren der Abgaswolke (22) umfasst, dass abhängig von den Sensordaten ein Wahrscheinlichkeitswert (P) berechnet wird, welcher die aktuelle Wahrscheinlichkeit für die Präsenz der Abgaswolke (22) angibt, und die Abgaswolke (22) dann detektiert wird, wenn der Wahrscheinlichkeitswert (P) größer als ein vorbestimmter Grenzwert (G) ist.

2. Verfahren nach Anspruch 1,
**dadurch gekennzeichnet, dass**
das Detektieren der Abgaswolke (22) abhängig von zumindest einer Messgröße als Sensordaten erfolgt, welche mittels eines in der Auspuffanlage (11) angeordneten Sensors (18) gemessen wird, insbesondere abhängig von zumindest einer der folgenden Messgrößen:
- einer Temperatur des Abgases und/oder
- einer Feuchtigkeit des Abgases und/oder
- einer Strömungsgeschwindigkeit des Abgases und/oder
- einem Abgasdruck und/oder
- einem Massenstrom des Abgases und/oder
- einer das Verhältnis einer Verbrennungsluft zu einem Kraftstoff in zumindest einem Brennraum einer Brennkraftmaschine (10) des Kraftfahrzeugs (1) charakterisierenden Messgröße, welche insbesondere mittels einer LambdaSonde gemessen wird.

3. Verfahren nach Anspruch 2,
**dadurch gekennzeichnet, dass**
das Detektieren der Abgaswolke (22) abhängig von einer aktuellen Motortemperatur als Sensordaten erfolgt.

4. Verfahren nach Anspruch 2 oder 3,
**dadurch gekennzeichnet, dass**
das Detektieren der Abgaswolke (22) abhängig von atmosphärischen Umgebungsbedingungen des Kraftfahrzeugs (1), insbesondere abhängig von einer Windgeschwindigkeit und/oder einer Luftfeuchtigkeit und/oder Lufttemperatur, erfolgt.

5. Verfahren nach einem der vorhergehenden Ansprüche,
**dadurch gekennzeichnet, dass**
das Detektieren der Abgaswolke (22) abhängig von zumindest einem Konstruktionsparameter des Kraftfahrzeugs (1) erfolgt, insbesondere abhängig von zumindest einem der folgenden Parameter:
- einem Abstand zwischen dem Ultraschallsensor (3) einerseits und einem Auslass (14, 15) eines Endrohrs (12, 13) der Auspuffanlage (11) andererseits und/oder
- einer Querschnittsgröße des Endrohrs (12, 13) und/oder
- der Anzahl von Endrohren (12, 13) der Auspuffanlage (11) und/oder
- der Anzahl von Abgasturboladern des Kraftfahrzeugs (1) und/oder
- einem Hubvolumen einer Brennkraftmaschine (10) des Kraftfahrzeugs (1) und/oder
- einem Typ der Brennkraftmaschine (10).

6. Verfahren nach einem der vorhergehenden Ansprüche,
**dadurch gekennzeichnet, dass**
das Detektieren der Abgaswolke (22) abhängig von einer Laufzeit der Ultraschallwellen und/oder abhängig von der Anzahl von Zielechos erfolgt, welche zu den ausgesendeten Ultraschallwellen durch zumindest einen Ultraschallsensor (3) empfangen werden.

7. Verfahren nach einem der vorhergehenden Ansprüche,
**dadurch gekennzeichnet, dass**
das Betreiben der Ultraschallsensorvorrichtung (2) abhängig von der Detektion der Abgaswolke (22) umfasst, dass durch die Ultraschallsensorvorrichtung (2) gemessene Abstandswerte, welche kleiner als ein vorbestimmter Schwellwert sind, aufgrund der Detektion der Abgaswolke (22) ausgeblendet werden.

8. Verfahren nach Anspruch 7,
**dadurch gekennzeichnet, dass**
das Ausblenden unter der Voraussetzung erfolgt, dass die aktuelle Geschwindigkeit (V) des Kraftfahrzeugs (1) unterhalb eines vorbestimmten Schwellwerts (S) liegt.

9. Verfahren nach einem der vorhergehenden Ansprüche,
**dadurch gekennzeichnet, dass**
abhängig von zumindest einem Schwingungsparameter des Ultraschallsensors (3), insbesondere abhängig von einer Ausschwingzeit einer Membran des Ultraschallsensors (3), ein blockierter Zustand des Ultraschallsensors (3) durch die Ultraschallsensorvorrichtung (2) detektiert wird, wobei das Betreiben der Ultraschallsensorvorrichtung (2) abhängig von der Detektion der Abgaswolke (22) umfasst, dass aufgrund der Detektion der Abgaswolke (22) die Detektion des blockierten Zustands durch die Ultraschallsensorvorrichtung (2) ignoriert wird.

10. Verfahren nach einem der vorhergehenden Ansprüche,
**dadurch gekennzeichnet, dass**
das Betreiben der Ultraschallsensorvorrichtung (2) abhängig von der Detektion der Abgaswolke (22) umfasst, dass aufgrund der Detektion der Abgaswolke (22) ein Steuersignal an die Auspuffanlage (11) abgegeben wird, wobei durch entsprechende Ansteuerung zumindest einer Komponente der Auspuffanlage (11) eine vorhandene Abgaswolke reduziert wird.

11. Verfahren nach Anspruch 10,
**dadurch gekennzeichnet, dass**
- durch das Steuersignal eine Drosselklappe angesteuert wird, mittels welcher das Abgas gedrosselt wird, und/oder
- die Auspuffanlage (11) zumindest zwei Endrohre (12, 13) aufweist, von denen zumindest eines verschließbar ist, und durch das Steuersignal das zumindest eine verschließbare Endrohr (12, 13) geöffnet wird.

12. Ultraschallsensorvorrichtung (2) für ein Kraftfahrzeug (1), mit zumindest einem Ultraschallsensor (3) und mit einer Steuereinrichtung (6), welche dazu ausgelegt ist, den Ultraschallsensor (3) zum Aussenden von Ultraschallwellen in einen Umgebungsbereich (9) des Kraftfahrzeugs (1) zum Durchführen einer Abstandsmessung anzusteuern,
wobei die Steuereinrichtung (6) dazu ausgelegt ist, anhand von Sensordaten zumindest eines von dem Ultraschallsensor (3) verschiedenen Sensors (18, 19, 20, 21) des Kraftfahrzeugs (1) eine von einer Auspuffanlage (11) des Kraftfahrzeugs (1) in den Umgebungsbereich (9) ausgegebene Abgaswolke (22), an welcher die Ultraschallwellen reflektiert werden, zu detektieren und die Ultraschallsensorvorrichtung (2) abhängig von der Detektion der Abgaswolke (22) zu betreiben, und **dadurch gekennzeichnet,**
**dass** das Detektieren der Abgaswolke (22) umfasst, dass abhängig von den Sensordaten ein Wahrscheinlichkeitswert (P) berechnet wird, welcher die aktuelle Wahrscheinlichkeit für die Präsenz der Abgaswolke (22) angibt, und die Abgaswolke (22) dann detektiert wird, wenn der Wahrscheinlichkeitswert (P) größer als ein vorbestimmter Grenzwert (G) ist.

13. Kraftfahrzeug (1), insbesondere Personenkraftwagen, mit einer Ultraschallsensorvorrichtung (2) nach Anspruch 12.

## Claims

1. Method for operating an ultrasound sensor device (2) of a motor vehicle (1), in which ultrasound waves are emitted into an area (9) surrounding the motor vehicle (1) by at least one ultrasound sensor (3) of the ultrasound sensor device (2) in order to carry out a distance measurement,
wherein a cloud (22) of exhaust gas which is output into the surrounding area (9) by an exhaust system (11) of the motor vehicle (1) and at which the ultrasound waves are reflected is detected by the ultrasound sensor device (2) on the basis of sensor data of at least one sensor (18, 19, 20, 21), different from the ultrasound sensor (3), of the motor vehicle (1), and the ultrasound sensor device (2) operates as a function of the detection of the cloud (22) of exhaust gas, and **characterized in that** the detection of the cloud (22) of exhaust gas comprises the fact that a probability value (P), which indicates the current probability of the presence of the cloud (22) of exhaust gas is calculated as a function of the sensor data, and the cloud (22) of exhaust gas is then detected when the probability value (P) is higher than a predetermined limiting value (G).

2. Method according to Claim 1,
**characterized in that**
the cloud (22) of exhaust gas is detected as a function of at least one measurement variable as sensor data which is measured by means of a sensor (18) arranged in the exhaust system (11), in particular as a function of at least one of the following measurement variables:
- a temperature of the exhaust gas and/or
- a moisture level of the exhaust gas and/or
- a flow rate of the exhaust gas and/or
- an exhaust gas pressure and/or
- a mass flow of the exhaust gas and/or
- a measurement variable which characterizes the ratio of combustion air to fuel in at least one combustion chamber of an internal combustion engine (10) of the motor vehicle (1) and which is measured, in particular, by means of a lambda probe.

3. Method according to Claim 2,
**characterized in that**
the cloud (22) of exhaust gas is detected as sensor data as a function of a current engine temperature.

4. Method according to Claim 2 or 3,
**characterized in that**
the cloud (22) of exhaust gas is detected as a function of atmospheric ambient conditions of the motor vehicle (1), in particular as a function of a wind speed and/or an air humidity level and/or air temperature.

5. Method according to one of the preceding claims,
**characterized in that**
the cloud (22) of exhaust gas is detected as a function of at least one design parameter of the motor vehicle (1), in particular as a function of at least one of the following parameters:
- a distance between the ultrasound sensor (3), on the one hand, and an outlet (14, 15) of an end pipe (12, 13) of the exhaust system (11), on the other, and/or
- a cross-sectional size of the end pipe (12, 13) and/or
- the number of end pipes (12, 13) of the exhaust system (11) and/or
- the number of exhaust gas turbochargers of the motor vehicle (1) and/or
- a cubic capacity of an internal combustion engine (10) of the motor vehicle (1) and/or
- a type of the internal combustion engine (10).

6. Method according to one of the preceding claims,
**characterized in that**
the cloud (22) of exhaust gas is detected as a function of a propagation time of the ultrasound waves and/or as a function of the number of target echoes which are received for the emitted ultrasound waves by at least one ultrasound sensor (3).

7. Method according to one of the preceding claims,
**characterized in that**
the operation of the ultrasound sensor device (2) as a function of the detection of the cloud (22) of exhaust gas comprises the fact that distance values which are measured by the ultrasound sensor device (2) and which are smaller than a predetermined threshold value are gated out owing to the detection of the cloud (22) of exhaust gas.

8. Method according to Claim 7,
**characterized in that**
the gating out occurs on condition that the current speed (V) of the motor vehicle (1) is below a predetermined threshold value (S).

9. Method according to one of the preceding claims,
**characterized in that**
a blocked state of the ultrasound sensor (3) is detected by the ultrasound sensor device (2) as a function of at least one oscillation parameter of the ultrasound sensor (3), in particular as a function of a transient time of a diaphragm of the ultrasound sensor (3), wherein the operation of the ultrasound sensor device (2) as a function of the detection of the cloud (22) of exhaust gas comprises the fact that owing to the detection of the cloud (22) of exhaust gas the detection of the blocked state by the ultrasound sensor device (2) is ignored.

10. Method according to one of the preceding claims,
**characterized in that**
the operation of the ultrasound sensor device (2) as a function of the detection of the cloud (22) of exhaust gas comprises the fact that owing to the detection of the cloud (22) of exhaust gas a control signal is output to the exhaust system (11), wherein a cloud of exhaust gas which is present is reduced by corresponding actuation of at least one component of the exhaust system (11).

11. Method according to Claim 10,
**characterized in that**
- a throttle valve by means of which the exhaust gas is throttled is actuated by means of the control signal, and/or
- the exhaust system (11) has at least two end pipes (12, 13), at least one of which can be closed off, and the at least one closable end pipe (12, 13) is opened by means of the control signal.

12. Ultrasound sensor device (2) for a motor vehicle (1), having at least one ultrasound sensor (3) and having a control device (6), which is configured to actuate the ultrasound sensor (3) to emit ultrasound waves into an area (9) surrounding the motor vehicle (1) in order to carry out a distance measurement, wherein the control device (6) is configured to detect, on the basis of sensor data of at least one sensor (18, 19, 20, 21), different from the ultrasound sensor (3), of the motor vehicle (1), a cloud (22) of exhaust gas which is output into the surrounding area (9) by an exhaust system (11) of the motor vehicle (1) and at which the ultrasound waves are reflected, and to operate the ultrasound sensor device (2) as a function of the detection of the cloud (22) of exhaust gas, and **characterized in that** the detection of the cloud (22) of exhaust gas comprises the fact that a probability value (P), which indicates the current probability of the presence of the cloud (22) of exhaust gas is calculated as a function of the sensor data, and the cloud (22) of exhaust gas is then detected when the probability value (P) is higher than a predetermined limiting value (G).

13. Motor vehicle (1), in particular a passenger car, having an ultrasound sensor device (2) according to Claim 12.

## Revendications

1. Procédé permettant de faire fonctionner un dispositif de détection à ultrasons (2) d'un véhicule automobile (1), dans lequel au moyen d'au moins un capteur à ultrasons (3) du dispositif de détection à ultrasons (2), des ondes ultrasonores sont émises dans une région environnante (9) du véhicule automobile (1) pour effectuer une mesure de distance, dans lequel, sur la base de données de capteur d'au moins un capteur (18, 19, 20, 21), différent du capteur à ultrasons (3), du véhicule automobile (1), un nuage de gaz d'échappement (22) émis dans la région environnante (9) par un système d'échappement (11) du véhicule automobile (1), nuage sur lequel les ondes ultrasonores sont réfléchies, est détecté par le dispositif de détection à ultrasons (2) et le fonctionnement du dispositif de détection à ultrasons (2) s'effectue en fonction de la détection du nuage de gaz d'échappement (22), et **caractérisé en ce que** la détection du nuage de gaz d'échappement (22) comporte le calcul d'une valeur de probabilité (P) en fonction des données de capteur, laquelle indique la probabilité actuelle de la présence du nuage de gaz d'échappement (22), et le nuage de gaz d'échappement (22) est détecté lorsque la valeur de probabilité (P) est supérieure à une valeur limite prédéfinie (G).

2. Procédé selon la revendication 1,
**caractérisé en ce que**
la détection du nuage de gaz d'échappement (22) s'effectue en fonction d'au moins une grandeur de mesure comme données de capteur, laquelle est mesurée au moyen d'un capteur (18) disposé dans le système d'échappement (11), en particulier en fonction d'au moins une des grandeurs de mesure suivantes :
- une température du gaz d'échappement et/ou
- une humidité du gaz d'échappement et/ou
- une vitesse d'écoulement du gaz d'échappement et/ou
- une pression de gaz d'échappement et/ou
- un débit massique du gaz d'échappement et/ou
- une grandeur de mesure caractérisant le rapport d'un air de combustion à un carburant dans au moins une chambre de combustion d'un moteur à combustion interne (10) du véhicule automobile (1), laquelle grandeur de mesure est mesurée en particulier au moyen d'une sonde lambda.

3. Procédé selon la revendication 2,
**caractérisé en ce que**
la détection du nuage de gaz d'échappement (22) s'effectue en fonction d'une température de moteur actuelle comme données de capteur.

4. Procédé selon la revendication 2 ou 3,
**caractérisé en ce que**
la détection du nuage de gaz d'échappement (22) s'effectue en fonction de conditions ambiantes atmosphériques du véhicule automobile (1), en particulier en fonction d'une vitesse du vent et/ou d'une humidité de l'air et/ou de la température de l'air.

5. Procédé selon l'une des revendications précédentes,
**caractérisé en ce que**
la détection du nuage de gaz d'échappement (22) s'effectue en fonction d'au moins un paramètre structural du véhicule automobile (1), en particulier en fonction d'au moins un des paramètres suivants :
- une distance entre le capteur à ultrasons (3) d'une part et une sortie (14, 15) d'un tuyau arrière d'échappement (12, 13) du système d'échappement (11) d'autre part et/ou
- une dimension de section transversale du tuyau arrière d'échappement (12, 13) et/ou
- le nombre de tuyaux arrière d'échappement (12, 13) du système d'échappement (11) et/ou
- le nombre de turbocompresseurs à gaz d'échappement du véhicule automobile (1) et/ou
- une cylindrée d'un moteur à combustion interne (10) du véhicule automobile (1) et/ou
- un type de moteur à combustion interne (10).

6. Procédé selon l'une des revendications précédentes,
**caractérisé en ce que**
la détection du nuage de gaz d'échappement (22) s'effectue en fonction d'un temps de propagation des ondes ultrasonores et/ou en fonction du nombre d'échos de cible, lesquels sont reçus par au moins un capteur à ultrasons (3) en rapport avec les ondes ultrasonores émises.

7. Procédé selon l'une des revendications précédentes,
**caractérisé en ce que**
le fonctionnement du dispositif de détection à ultrasons (2) en fonction de la détection du nuage de gaz d'échappement (22) comporte la suppression, en raison de la détection du nuage de gaz d'échappement (22), de valeurs de distance mesurées par le dispositif de détection à ultrasons (2), lesquelles sont inférieures à une valeur seuil prédéfinie.

8. Procédé selon la revendication 7,
**caractérisé en ce que**
la suppression s'effectue à la condition que la vitesse actuelle (V) du véhicule automobile (1) est inférieure à une valeur seuil prédéfinie (S).

9. Procédé selon l'une des revendications précédentes,
**caractérisé en ce**
**qu'**en fonction d'au moins un paramètre d'oscillation du capteur à ultrasons (3), en particulier en fonction d'un temps d'évanouissement des oscillations d'une membrane du capteur à ultrasons (3), un état bloqué du capteur à ultrasons (3) est détecté par le dispositif de détection à ultrasons (2), le fonctionnement du dispositif de détection à ultrasons (2) en fonction de la détection du nuage de gaz d'échappement (22) comportant le fait que la détection de l'état bloqué par le dispositif de détection à ultrasons (2) est ignorée en raison de la détection du nuage de gaz d'échappement (22).

10. Procédé selon l'une des revendications précédentes,
**caractérisé en ce que**
le fonctionnement du dispositif de détection à ultrasons (2) en fonction de la détection du nuage de gaz d'échappement (22) comporte la délivrance d'un signal de commande au système d'échappement (11) en raison de la détection du nuage de gaz d'échappement (22), un nuage de gaz d'échappement existant étant réduit par la commande correspondante d'au moins un composant du système d'échappement (11).

11. Procédé selon la revendication 10,
**caractérisé en ce que**
- un clapet d'étranglement est commandé par le signal de commande, clapet au moyen duquel le gaz d'échappement est étranglé, et/ou
- le système d'échappement (11) comprend au moins deux tuyaux arrière d'échappement (12, 13), parmi lesquels au moins un peut être fermé, et l'au moins un tuyau arrière d'échappement (12, 13) pouvant être fermé est ouvert par le signal de commande.

12. Dispositif de détection à ultrasons (2) pour un véhicule automobile (1), comprenant au moins un capteur à ultrasons (3) et un dispositif de commande (6), lequel est conçu pour commander le capteur à ultrasons (3) pour l'émission d'ondes ultrasonores dans une région environnante (9) du véhicule automobile (1) pour effectuer une mesure de distance,
dans lequel le dispositif de commande (6) est conçu pour, sur la base de données de capteur d'au moins un capteur (18, 19, 20, 21), différent du capteur à ultrasons (3), du véhicule automobile (1), détecter un nuage de gaz d'échappement (22) émis dans la région environnante (9) par un système d'échappement (11) du véhicule automobile (1), nuage sur lequel les ondes ultrasonores sont réfléchies, et pour faire fonctionner le dispositif de détection à ultrasons (2) en fonction de la détection du nuage de gaz d'échappement (22), et **caractérisé en ce que** la détection du nuage de gaz d'échappement (22) comporte le calcul d'une valeur de probabilité (P) en fonction des données de capteur, laquelle indique la probabilité actuelle de la présence du nuage de gaz d'échappement (22), et le nuage de gaz d'échappement (22) est détecté lorsque la valeur de probabilité (P) est supérieure à une valeur limite prédéfinie (G).

13. Véhicule automobile (1), en particulier voiture particulière, comprenant un dispositif de détection à ultrasons (2) selon la revendication 12.
